# EUROPEAN PATENT APPLICATION

(11) **EP 3 866 311 A1**
(43) Date of publication of application: **18.08.2021**
(21) Application number: 19870538.6
(22) Date of filing: 08.10.2019
(51) Int. Cl.: H02K 5/16

(54) **BEARING CHAMBER STRUCTURE FOR MOTOR**

(30) Priority: 08.10.2018 CN 201821625539 U
(71) Applicant: Guangdong Zhaoqing L & V Co. Ltd, Zhaoqing, Guangdong 526238 (CN)
(72) Inventor: GONG, Hongyu, Zhaoqing, Guangdong 526238 (CN); FENG, Chen, Zhaoqing, Guangdong 526238 (CN); ZHU, Jianqiang, Zhaoqing, Guangdong 526238 (CN); CHEN, Jiahui, Zhaoqing, Guangdong 526238 (CN)
(74) Representative: Banzer, Hans-Jörg
(86) International application number: PCT/CN2019/109937
(87) International publication number: WO 2020/073886

(57) **Abstract**

The present application relates to a bearing chamber structure for a motor, which comprises a bearing housing integrally formed with a motor housing, wherein the bearing housing defines a chamber for accommodating a bearing which is mounted on a rotor shaft against a shoulder of the rotor shaft and received in the chamber, and one end of the rotor shaft protrudes outwards through a central opening of the bearing housing and is coupled with an output gear to output power, and wherein the bearing housing includes a flange portion adapted to be sandwiched between the output gear and the bearing. By adopting the bearing chamber structure for the motor according to the present application, the axial impact force that the motor can withstand is greatly increased, and the operating stability is improved, and the noise in the operating process is reduced.

## Description

### Technical Field

The present application relates to the field of motors, in particular to a bearing chamber structure for a motor especially used in an impact environment.

### Background art

In the field of automobiles, electric motors are often used in various automobile electric tailgate lifting systems or automatic door closing systems to realize tailgate lifting or door closing. In the prior art, the housing or end cover structure of these motors includes a bearing chamber structure for accommodating a bearing of the rotor shaft. The bearing housing of the bearing chamber structure is usually integrally formed with the motor housing.

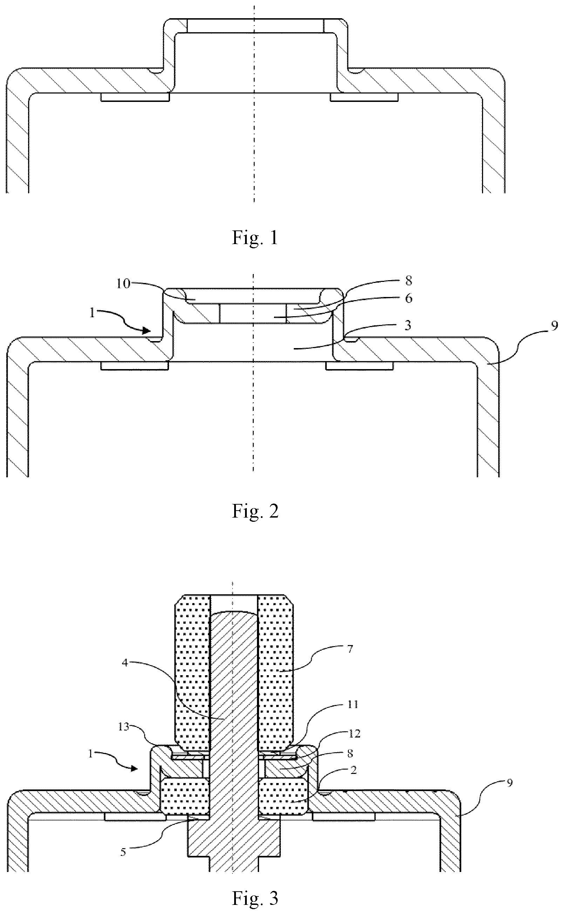

As shown in Fig. 1, the bearing chamber structure of the prior art includes a bearing housing defining a chamber for accommodating a bearing for a rotor shaft, the bearing housing being provided with an opening for one end of the rotor shaft to pass through, and the end of the rotor shaft is coupled with an output gear outside the chamber to transmit power. However, when the motor is used in an environment with large impact, an axial motion of the output gear connected to one end of the rotor shaft often occurs, which will produce a large impact force in the axial direction, and this axial impact force (especially the impact force towards the motor components) is mainly borne by the bearing in the prior art design of the bearing chamber structure. However, because the pulling-off force of the bearing pressing on the bearing chamber is far from satisfying the axial impact force from the gear, it is easy to cause damage to the motor eventually.

In addition, in the present field, the motor housing, the output gear and the bearing are usually made of metal materials, so when the above-mentioned axial motion and axial impact force exist during the rotation of the output gear, contact and collision will occur between the output gear and the bearing or between the output gear and the housing, resulting in a loud noise during the operation of the motor and thus discomfort to the motor user.

Therefore, it is necessary to propose a new bearing chamber structure for a motor, which can overcome one or more of the above problems and/or other defects existing in the prior art.

### Summary of the Invention

The present invention is proposed in this context, and aims to provide a new bearing chamber structure for a motor, so as to make the motor housing withstand a greater axial force in the axial direction, thus enabling the output gear to withstand a greater axial impact force, reducing potential risks, improving the qualified rate of the motors, and reducing the operation noise of the motor as much as possible.

The bearing chamber structure for a motor according to the present invention comprises a bearing housing integrally formed with a motor housing, the bearing housing defining a chamber for accommodating a bearing which is mounted on a rotor shaft against a shoulder of the rotor shaft and received in the chamber, one end of the rotor shaft protruding outward through a central opening of the bearing housing and being coupled with an output gear to output power, wherein the bearing housing includes a flange portion adapted to be sandwiched between the output gear and the bearing.

Advantageously, the bearing housing and the motor housing are integrally formed by stamping, and the flange portion is formed by stamping in a direction opposite to the forming direction of the bearing housing.

Advantageously, the flange portion is recessed relative to the axially outermost edge of the bearing housing, so as to define a cavity.

Advantageously, a first washer and a second washer are stacked in the cavity between the output gear and the flange portion.

Advantageously, the first washer is in a tight fit with the rotor shaft, and the second washer is in a tight fit with a radial inner wall of the bearing housing defining the cavity.

Advantageously, the first washer and the second washer are made of plastic materials.

By adopting such a bearing chamber structure for the motor of the present invention, the axial impact force that the motor can withstand is greatly increased, the operating stability of the motor is improved, and the noise in the operating process is reduced.

### Brief Description of the Drawings

The above and other features and advantages of the present invention will be more easily understood by the following description with reference to the accompanying drawings, in which:
Fig. 1 shows a bearing chamber structure for a motor in the prior art in a sectional view;
Fig. 2 shows an exemplary bearing chamber structure for a motor according to the present invention in a sectional view; and
Fig. 3 shows an exemplary bearing chamber structure for a motor assembled with a bearing, a rotor shaft and an output gear according to the present invention in a sectional view.

### Detailed description of the Embodiments

The present application will be further described in detail with reference to the attached drawings and specific embodiments. Terms about orientation that may be used in the following description, such as "upper", "lower", "inner", "outer", "radial", "axial", etc., unless explicitly stated, are only for convenience of description, without any limitation to the technical solutions of the present application.

In view of the shortcomings of the bearing chamber structure for the motor in the prior art (as shown in Fig. 1) mentioned in the Background Art, a new motor housing structure is proposed which can better adapt to an environment for such as door closing, tailgate lifting and so on. Figs. 2 and 3 respectively show a bearing chamber structure for a motor and the bearing chamber structure assembled with a bearing, a rotor shaft and an output gear according to an embodiment of the present application in a sectional view.

It should be understood that, especially in the environment with large impact, such as in the automobile electric tailgate lifting systems or the automatic door closing systems, a higher anti-impact capability of the motor is required. Usually due to the large impact, the output gear is prone to displace/move in the axial direction during its rotation, which produces a great axial impact force. This impact force is mainly borne by the bearing of the rotor shaft in the known motor housing design. However, the bearing cannot resist this axial impact force, which eventually transfers the force to various components of the motor, and finally leads to the damage to the motor.

The bearing chamber structure for the motor according to the embodiment of the present application shown in Fig. 2 and Fig. 3 is improved on the basis of the existing design. Similar to the existing design, the bearing chamber structure 1 includes a bearing housing integrally formed with a motor housing 9, especially integrally formed by stamping, wherein the bearing housing defines a chamber 3 for accommodating a bearing 2 mounted on a rotor shaft 4 against a shoulder 5 of the rotor shaft 4 and received in the chamber 3, and one end of the rotor shaft 4 protrudes outward through a central opening 6 of the bearing housing and is coupled with an output gear 7 to output power. Different from the prior art, the bearing chamber structure 1 advantageously includes an additional load-bearing structure positioned between the output gear 7 and the bearing 2, the load-bearing structure being preferably integrally formed on the motor housing 9, so that the axial impact force from the output gear can be effectively shared.

According to a specific embodiment shown in Fig. 2, the load-bearing structure includes a flange portion 8 stamped in a direction opposite to the forming direction of the bearing housing, and the flange portion 8 is sandwiched between the output gear 7 and the bearing 2 to serve as the above-mentioned additional load-bearing structure. The output gear 7 is located above the flange portion 8, which contributes to make the motor housing 9 bear the axial impact force from the output gear 7 as much as possible via the flange portion 8, thus avoiding the damage to the motor components due to the bearing 2 being unable to withstand the impact force. However, it should be understood that other forms of load-bearing structures capable of achieving the above functions and objectives are also possible.

Referring to Figs. 2 and 3, the flange portion 8 is recessed with respect to the axially outermost edge 13 of the bearing housing to define a cavity 10. Two washers 11 and 12, preferably made of plastic materials, are stacked in the cavity 10 between the flange portion 8 and the output gear 7. Of course, according to specific requirements, more washer structures can also be arranged.

As shown in Fig. 3, the first washer 11 is arranged to be in a tight fit with the rotor shaft 4, so that the first washer 11 can rotate together with the rotor shaft 4 and the output gear 7. The second washer 12 is in a tight fit with a radial inner wall of the bearing housing defining the cavity 10, so that friction or collision only occurs between the first washer 11 and the second washer 12 made of plastic materials during the rotation of the output gear 7, thereby avoiding direct contact between the motor housing 9 and the output gear 7 generally made of metal material, and thus greatly reducing the noise of the motor during operation.

The motor housing 9 is usually formed as one piece with the bearing housing. According to a specific embodiment, a part of the motor housing is stamped upward in the axial direction (i.e., in a direction away from the housing chamber accommodating the motor components) into the bearing chamber structure 1 for the rotor shaft 4 by means of a stamping die. Then, the stamping die is used again to stamp downward in the axial direction (i.e., in a reverse direction) by means of a punch, so that a recessed flange portion 8 is formed to serve as an additional load-bearing structure between the output gear 7 and the bearing 2 and to provide a cavity 10 for housing plastic washers. In the process of assembling the motor, the output gear is usually press-fitted after two stacked plastic washers are arranged in place, and the direct contact between the output gear and the metal housing is replaced by the contact between the two plastic washers, so as to achieve the purpose of noise reduction.

According to the bearing chamber structure for the motor of the present application, the axial impact force from the gear that the motor is able to withstand can be greatly increased without other extra process costs. In addition, the bearing chamber structure of the housing which is formed by a reverse stamping is easy to process, can adapt to various motors with different sizes, and has a good structural stability.

Preferably, the motor described herein can be a DC motor used in an automobile electric tailgate lifting system or an automatic door closing system.

It should be noted that the embodiments described above should only be regarded as illustrative, and the application is not limited thereto. By considering the content of this specification, those skilled in the art can make various changes and modifications without departing from the scope or spirit of the application. The true scope of the present application is defined by the appended claims and equivalent solutions.

## Claims

1. A bearing chamber structure for a motor, comprising a bearing housing integrally formed with a motor housing, the bearing housing defining a chamber for accommodating a bearing which is mounted on a rotor shaft against a shoulder of the rotor shaft and received in the chamber, one end of the rotor shaft protruding outward through a central opening of the bearing housing and being coupled with an output gear to output power, **characterized in that** the bearing housing comprises a flange portion adapted to be sandwiched between the output gear and the bearing.

2. The bearing chamber structure according to claim 1, wherein the bearing housing and the motor housing are integrally formed by stamping, and the flange portion is formed by stamping in a direction opposite to the forming direction of the bearing housing.

3. The bearing chamber structure according to claim 2, wherein the flange portion is recessed relative to the axially outermost edge of the bearing housing, so as to define a cavity.

4. The bearing chamber structure according to claim 3, wherein a first washer and a second washer are stacked in the cavity between the output gear and the flange portion.

5. The bearing chamber structure according to claim 4, wherein the first washer is in a tight fit with the rotor shaft, and the second washer is in a tight fit with a radial inner wall of the bearing housing defining the cavity.

6. The bearing chamber structure according to claim 4 or 5, wherein the first washer and the second washer are made of plastic materials.
